# EUROPEAN PATENT APPLICATION

(11) **EP 2 722 241 A1**
(43) Date of publication of application: **23.04.2014**
(21) Application number: 12188995.0
(22) Date of filing: 18.10.2012
(51) Int. Cl.: B60T 17/18, B60T 11/20

(54) **Brake system for a vehicle and method of operating a brake system of a vehicle**

(71) Applicant: ROBERT BOSCH GMBH, 70442 Stuttgart (DE)
(72) Inventor: Cagnac, Bastien, 60660 Cramoisy (FR)

(57) **Abstract**

The present invention provides a brake system for a vehicle comprising a first master cylinder (50) with at least a first pressure chamber (52) and a first piston (54), which is movable at least partially into the first pressure chamber (52) by a braking force applied on a brake actuation element, a first brake circuit (62) with at least one first wheel brake cylinder (64), and a second brake circuit (68) with at least one second wheel brake cylinder (70), wherein the second brake circuit (68) is tied to a second pressure chamber (72) of a second master cylinder (74) comprising the second pressure chamber (72), a pre-chamber (76) and a second piston (78) separating the second pressure chamber (72) from the pre-chamber (76), and wherein the pre-chamber (76) is hydraulically connected to the first pressure chamber (52) via a hydraulic line (80). The present invention also relates to a method of operating a brake system of a vehicle having seperate master cylinders and a booster pump (94)in the second brake circuit (68) for generating a hydraulic pressure in the at least one second wheel brake cylinder (70) independently of a hydraulic pressure being generated in the first pressure chamber (52).

## Description

The present invention relates to a brake system for a vehicle. Further, the present invention also relates to a method of operating a brake system of a vehicle.

### Description of the Related Art

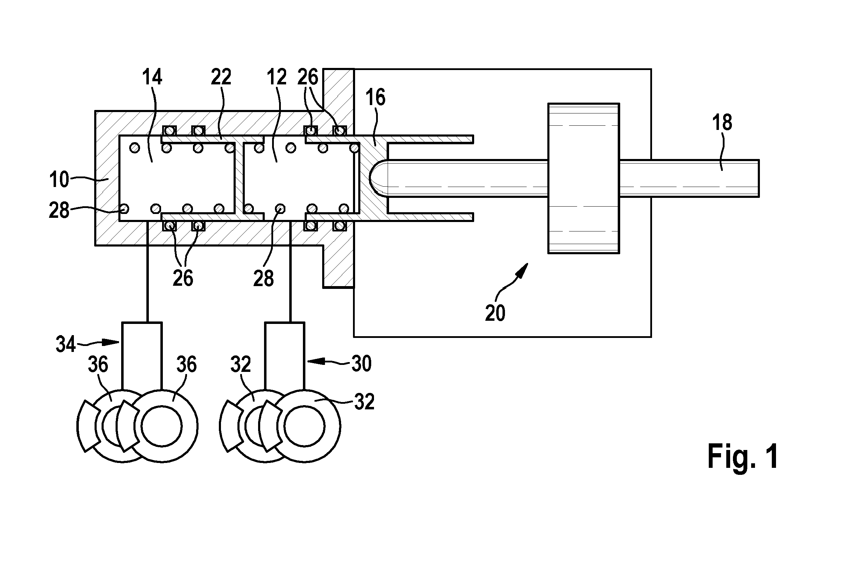

Fig. 1 shows a schematic drawing of a conventional brake system. An example of such a conventional brake system is described in DE 196 01 110 A1, for instance.

The brake system of Fig. 1 comprises a master cylinder 10 with a first pressure chamber 12 and a second pressure chamber 14. The size of the first pressure chamber 12 is variable by a first piston 16, which is mechanically linked to a (not shown) brake pedal via a push rod 18. A total force transferred on the first piston 16 via the push rod 18 may be increased by a (schematically shown) brake booster 20. The brake booster 20 may be a vacuum booster, as is disclosed in DE 196 01 110 A1.

The second pressure chamber 14 is separated from the first pressure chamber 12 by a second piston 22, which is movable arranged within the master cylinder 10. Due to its two pressure chambers 12 and 14, the master cylinder 10 may be called a tandem master cylinder. To inhibit a leakage of brake fluid out of the pressure chambers 12 and 14, each of the pistons 16 and 22 is surrounded by two sealing rings 26. Moreover, a return spring 28 is arranged within each pressure chamber 12 and 14 to keep the contacted pistons 16 and 22 in outer positions when no force is applied on the brake pedal. Thus, the driver and/or the brake booster 20 have to overcome the friction of the four sealing rings 26 and a restoring force of the two return springs 28 for increasing an internal pressure within the pressure chambers 12 and 14.

The brake system of Fig. 1 also comprises a first brake circuit 30 with two first wheel brake cylinders 32 and a second brake circuit 34 with two second wheel brake cylinders 36. The first brake circuit 30 is tied to the first pressure chamber 12. Accordingly, the second brake circuit 34 is connected to the second pressure chamber 14 via an opening within a housing of the master cylinder 10.

To decrease the risk of an injury of the driver in case of a car accident, DE 196 01 110 A1 describes a crash sensor which shall activate an increase of pressure within a vacuum chamber of the vacuum booster to provide an additional force, thus to draw the brake pedal away from the driver.

### Brief Summary of the Invention

The present invention provides a brake system for a vehicle with the features of claim 1 and a method of operating a brake system of a vehicle with the features of claim 10.

### Advantages of the Invention

The present invention provides more opportunities to arrange at least two pressure chambers at a vehicle. Specially, the present invention provides a brake system with a reduced package length along a longitudinal axis of at least one movable piston and/or braking force transmission element, as is explained in more details below. Thus, it is possible to arrange the brake actuation element of the brake system further away from a driver. This ensures that there is no unwanted contact between the brake actuation element and the driver, even when the driver is accelerated in the direction of the brake actuation element.

Therefore, the present invention provides a good security standard for a driver without requiring an expensive mechanism which draws/pushes the brake actuation element out of the reach of the driver in case of an accident. Furthermore, the brake system does not require a crash sensor to activate the expensive mechanism. The present invention thus provides a good security standard at low costs.

In an advantageous embodiment, the second master cylinder is arranged distant from the first master cylinder. This allows an arrangement of both master cylinders and the brake actuation element in positions, wherein both master cylinders do and the brake actuation element not stick out into the passenger compartment. Nevertheless, the brake actuation element is still mechanically connectable to the first master cylinder so that the driver has the opportunity to brake directly within the first master cylinder by applying the braking force on the brake actuation element.

In another advantageous embodiment, the first piston is movable at least partially into the first pressure chamber along a first longitudinal axis and the second piston is movable at least partially into the second pressure chamber along a second longitudinal axis, wherein the second master cylinder is arranged with regard to the first master cylinder in a way that the second longitudinal axis is tilted to the first longitudinal axis or the second longitudinal axis runs parallel to and distant from the first longitudinal axis. It is therefore possible to arrange the second master cylinder in a variety of different positions with regard to the first master cylinder.

Preferably, the first master cylinder is of a master cylinder type with only a single pressure chamber. It is therefore possible to use an inexpensive master cylinder for the realization of the inventive brake system.

Further advantages are provided when the second brake circuit comprises at least one pump, wherein the second brake pressure within the at least one second wheel brake cylinder of the second brake circuit is also increasable by the at least one pump of the second brake unit. In this case the at least one pump can provide a faster build-up of a preferred value of the second brake pressure within the at least one second wheel brake cylinder.

In a preferred embodiment, the brake system also comprises a control unit being designed to control the at least one pump of the second brake circuit in a way that the second pressure within the at least one second wheel brake cylinder is build-up by the at least one pump of the second brake circuit even when an increase of a second internal pressure within the second pressure chamber is inhibited despite a braking force applied on the brake actuation element. In this case the control unit is designed to overcome a failure/leakage within the first master cylinder and/or the first brake circuit by activating the at least one pump of the second brake circuit to build-up a preferred value of the second brake pressure within the at least one second wheel brake cylinder of the second brake circuit.

Preferably, the control unit is designed to compare a target value with regard to the first internal pressure, at least one pressure within the first brake circuit, the second internal pressure and/or at least one pressure within the second brake circuit with an actual value of the first internal pressure, the at least one pressure within the first brake circuit, the second internal pressure and/or the at least one pressure within the second brake circuit, wherein the control unit is further designed to increase the output of the at least one pump of the second brake circuit in case that the at least one actual value differs from the at least one target value. Thus, it is also possible to detect/recognize the failure/leakage within the first master cylinder and/or the first brake circuit by the control unit.

Also, the control unit may further be designed to close at least one valve within the hydraulic line in case that the at least one actual value differs from the at least one target value. Thus, it is possible to ensure that no brake fluid of the pre-chamber of the second master cylinder is lost.

For instance, the brake system comprises at least one brake force sensor, brake pressure sensor and/or displacement sensor arranged at the brake actuation element and/or the at least one braking force transmission element, wherein the control unit is designed to define the at least one target value depending on at least one value received from the at least one brake force sensor, brake pressure sensor and/or displacement sensor. The control unit may thus be designed to use the at least one signal of at least one sensor generally provided within a brake system to carry out the advantageous comparison of the at least one target value with the at least one actual value.

The advantages described above are also provided when the corresponding method of operating a brake system of a vehicle is carried out.

### Description of the drawings

More features and advantages of the present invention are further explained using the figures, which show:
- Fig. 1: a schematic drawing of a conventional brake system;
- Fig. 2: a schematic drawing of an embodiment of the brake system; and
- Fig. 3: a flow chart of an embodiment of the method of operating a brake system of a vehicle.

### Embodiments of the Invention

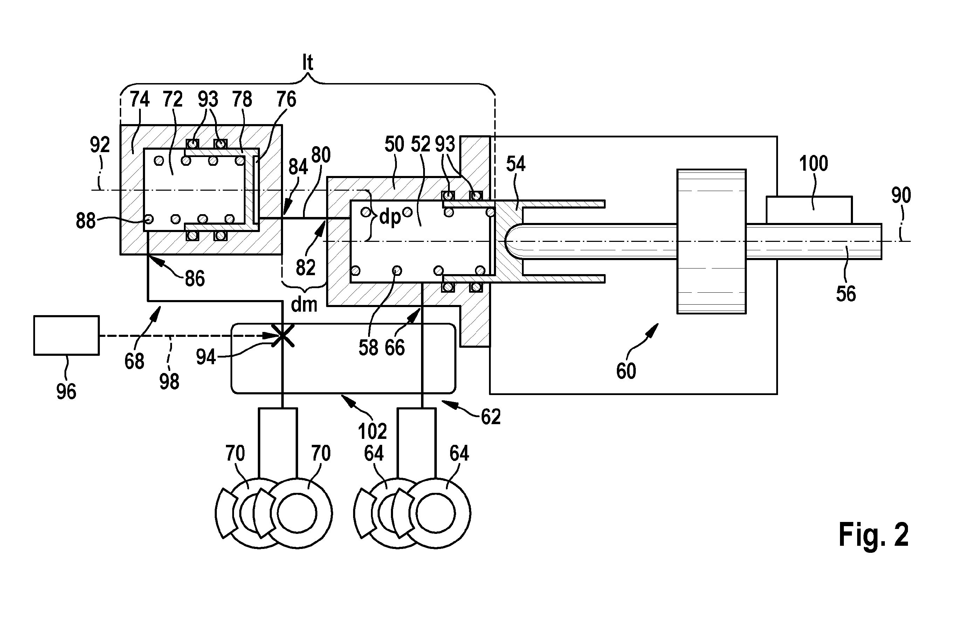

Fig. 2 shows a schematic drawing of an embodiment of the brake system.

The brake system shown schematically in Fig. 2 is designed to be used in a vehicle. The use of the brake system of Fig. 1 is not restricted to a certain type of a vehicle. The brake system may for instance be used within an electric vehicle, a hybrid vehicle or within a conventional vehicle. The vehicle with the brake system may be a car or a motorcycle, for example.

The brake system of Fig. 1 has a first master cylinder 50 with a first pressure chamber 52 and a first piston 54. The first piston 54 is mechanically connectable via at least one braking force transmission element 56 to a (not shown) brake actuation element in a way that the first piston 54 is movable against a restoring force of a first return spring 58 at least partially into the first pressure chamber 52 by at least a braking force applied on the brake actuation element (by a driver). In the embodiment of Fig. 2 the at least one braking force transmission element 56 is a push rod (input rod). However, the brake system is not restricted to a certain type of mechanical connection between the first piston 54 and the brake actuation element or to a certain example of the at least one braking force transmission element 56. The brake actuation element may be a brake pedal, for instance. The brake system may also be used with another type of brake actuation element instead of a brake pedal.

Optionally, the first piston 54 may also be linked to a brake booster 60. The brake booster 60 may be a vacuum booster, for instance. In another advantageous embodiment of the brake system the brake booster 60 comprises an electrical motor. However, the brake system is not restricted to a certain type of brake booster 60. The brake system may also be used without a brake booster 60.

A first internal pressure within the first pressure chamber 52 is increasable by moving the first piston 54 at least partially into the first pressure chamber 52, wherein the first return spring 58 is arranged. Thus, the driver of the vehicle with the brake system of Fig. 2 has the opportunity to increase the first internal pressure within the first pressure chamber 52 by applying the braking force/a braking pressure on the brake actuation element. The brake booster 60 may support the driver during the increase of the first internal pressure within the first pressure chamber 52 by applying an additional booster force on the first piston 54.

The brake system of Fig. 2 also comprises a first brake circuit 62 with at least a first wheel brake cylinder 64. The first brake circuit 62 is (directly) tied to the first pressure chamber 52 in a way that a first brake pressure within the at least one first wheel brake cylinder 64 of the first brake circuit 62 is increasable by an increase of the first internal pressure within the first pressure chamber 52. For instance, the first brake circuit 62 contacts an opening 66/bore within the housing of the first master cylinder 50. The driver therefore has an opportunity to increase the first brake pressure within the at least one first wheel brake cylinder 64 of the first brake circuit 62 by applying the braking force on the brake actuation element even in case of a failure/breakdown of the electrical system of the vehicle with the brake system. Thus, the driver can stop his vehicle without the brake booster 60 and without support of any electrical component of the brake system.

Furthermore, the brake system of Fig. 2 has a second brake circuit 68 with at least a second wheel brake cylinder 70. The second brake circuit 68 is (directly) tied to a second pressure chamber 72 of a second master cylinder 74. The second master cylinder 74 may have another opening 86/bore (at the side of the second pressure chamber 72), which is contacted by the second brake circuit 68.

The second master cylinder 74 comprises the second pressure chamber 72, a pre-chamber 76 and a second piston 78, wherein the second piston 78 separates the second pressure chamber 72 from the pre-chamber 76. The pre-chamber 76 is hydraulically connected to the first pressure chamber 52 via a hydraulic line 80. The hydraulic line 80 may extend from an opening 82/bore within the housing of the first master cylinder 50 to another opening 84/bore within the housing of the second master cylinder 74. When the first internal pressure within the first pressure chamber 52 of the first master cylinder 50 is build-up, brake fluid is pushed through the hydraulic line 80 into the pre-chamber 76. Thus, a force is applied on the second piston 78 in a way that the second piston 78 is moved against a restoring force of a second return spring 88 within the second pressure chamber 72. The movement of the second piston 78 against the restoring force of the second return spring 88 increases the volume of the pre-chamber 76, wherein the volume of the second pressure chamber 72 is decreased. Thus, it is possible to build-up a second internal pressure within the second pressure chamber 72.

A second brake pressure within the at least one second wheel brake cylinder 70 of the second brake circuit 68 is then increasable by the increase of the second internal pressure within the second pressure chamber 72. The second brake pressure of the at least one second wheel brake cylinder 70 is therefore also increasable by the braking force applied on the brake actuation element. Thus, it is ensured that the driver still has the opportunity to increase the second brake pressure within the at least one second wheel brake cylinder 70 of the second brake circuit 68 after a failure/breakdown of the electrical system of his vehicle.

Moreover, the brake system of Fig. 2 provides the advantage that only the first piston 54 has to be mechanically connected to the brake actuation element (e.g. brake pedal). It is therefore not necessary to provide a mechanical link between the brake actuation element and the second piston 78 of the second master cylinder 74 or between the first piston 54 of the first master cylinder 50 and the second piston 78. Instead, it is sufficient to connect the two master cylinders 50 and 74 only via the hydraulic line 80. The hydraulic connection of the hydraulic line 80 between the two master cylinders 50 and 74 ensures that the driver still has the opportunity to increase the second brake pressure within the at least one second wheel brake cylinder 70 of the second brake circuit 68, even though a mechanical connection between the brake actuation element and the second master cylinder 74 is missing.

The hydraulic connection between the two master cylinders 50 and 74 via the hydraulic line 80 allows an arrangement of the second master cylinder 74 independently of the arrangement of the first master cylinder 50. It is therefore possible to arrange the second master cylinder 74 distant from the first master cylinder 50. (The loss of the mechanical connection makes it possible to move the second master cylinder 74 away from the first master cylinder 50.) A minimum distance dm between the two master cylinders 50 and 74 may be unequal zero. Thus, no space close to the brake actuation element is required for the arrangement of the second master cylinder 74. This facilitates the arrangement of the two master cylinders 50 and 74.

Furthermore, the minimum distance dm unequal zero allows an arrangement of the two master cylinders 50 and 74 and the brake actuation element in a way that neither the brake actuation element nor the first master cylinder 50 is too close to the feet of the driver. Thus, an unwanted contact between the feet of the driver and the components of his vehicle is therefore inhibited even in case of an accident. The brake system of Fig. 2 therefore provides a good security standard even without any additional mechanism to transfer the brake actuation element and/or one of the master cylinders 50 and 74 quickly away from the driver in case of an accident.

In the embodiment of Fig. 2, the first piston 54 is movable at least partially into the first pressure chamber 52 along a first longitudinal axis 90. Similarly, the second piston 78 is movable at least partially into the second pressure chamber 72 along a second longitudinal axis 92. Moreover, the second master cylinder 74 is arranged with regard to the first master cylinder 50 in a way that the second longitudinal axis 92 runs parallel to the first longitudinal axis 90, wherein a distance dp between the two axis 90 and 92 is unequal zero. This arrangement of the two master cylinders 50 and 74 may decrease the total length It of the two master cylinders 50 and 74 along the first longitudinal axis 90. For instance, the total length It of the two master cylinders 50 and 74 (along the first longitudinal axis 90) may be smaller than the length of a tandem master cylinder. The total length It (along the first longitudinal axis 90) or space required for an arrangement of the two master cylinders 50 and 74 within the vehicle is thus reducible. Specially, the package length extending into the passenger compartment is reducible significantly. This also facilitates the arrangement of the two master cylinders 50 and 74 within the vehicle and provides a good security standard for the driver of the vehicle.

In another advantageous embodiment, the second longitudinal axis 92 is tilted to the first longitudinal axis 90. Preferable, an angle between the two longitudinal axes 90 and 92 is between 10° and 80°. This advantageous embodiment also provides the advantages described in the paragraph above.

To inhibit a leakage out of any of the master cylinders 50 and 74, two sealing rings 93/lip seals may be arranged around each of the pistons 54 and 78. However, only the friction of the two sealing rings 93/lip seals and the restoring force of the first return spring 58 have to be overcome for braking at least partially into the first pressure chamber 52. Thus, it is possible to reduce the total force (braking force and/or booster force) necessary for the build-up of the first internal pressure within the first pressure chamber 52, for instance to a total force about 20 N. The efficiency of the performance of the backup mode of the brake system is therefore improved. The actuation point of the brake system may be transferred to a lower value of the total force. The driver then has the opportunity to brake within the first master cylinder 50 with a decreased force, at least in case of the backup mode.

The first master cylinder 50 shown in Fig. 2 is of a master cylinder type with only a single pressure chamber. Preferably, the second master cylinder 74 also comprises only the chambers 72 and 76. Thus, it is possible to use inexpensive equipment for the master cylinders 50 and 74.

The second brake circuit 68 shown in Fig. 2 also comprises at least one pump 94, wherein the second brake pressure within the at least one second wheel brake cylinder 70 of the second brake circuit 68 is also increasable by the at least one pump 94 of the second brake circuit 68. The brake system also comprises a control unit 96 designed to control the at least one pump 94 of the second brake circuit 68 in a way that the second brake pressure within the at least one second wheel brake cylinder 70 of the second brake circuit 68 is build-up by the at least one pump 94 of the second brake circuit 68 even when an increase of a second internal pressure within the second pressure chamber 72 is inhibited despite a braking force applied on the brake actuation element.

For instance, the control unit 96 is designed to compare a target value with regard to the first internal pressure, at least one pressure within the first brake circuit 62, the second internal pressure and/or at least one pressure within the second brake circuit 68 with an actual value of the first internal pressure, the at least one pressure within the first brake circuit 62, the second internal pressure and/or at least one pressure within the second brake circuit 68. Preferably, the control unit 96 is further designed to increase the output of the at least one pump 94 of the second brake circuit 68 by a corresponding control signal 98 in case that the at least one actual value differs from (corresponds not to) the at least one target value.

In case that the brake system comprises at least one brake force sensor 100, brake pressure sensor and/or displacement sensor arranged at the brake actuation element and/or the at least one braking force transmission element 56, the control unit 96 is preferably designed to define the at least one target value depending on at least one value received from the at least one brake force sensor 100, brake pressure sensor and/or displacement sensor. Thus, the signals of sensors 100 generally provided within a brake system may be used for choosing/defining the at least one target value. The control unit 96 therefore does not require an additional sensor of the brake system.

Moreover, the control unit 96 may further be designed to close at least one (not shown) valve within the hydraulic line 80 in case that the at least one actual value differs from (corresponds not to) the at least one target value. Thus, a loss of brake fluid out of the pre-chamber 76 of the second master cylinder 74 may be inhibited even in case of a leakage within the first master cylinder 50 and/or the first brake circuit 62.

The at least one pump 94 of the second brake circuit 68 may be a sub-unit of an ESP-system 102. Thus, it is possible to use a component generally provided within a brake system to increase the second brake pressure within the at least one second wheel brake cylinder 70 of the second brake circuit 68, e.g. in case of a failure/leakage within the brake system. The backup mode of the brake system performed by the at least one pump 94 therefore does not require an additional component of the second brake circuit 68.

The advantageous architecture of the brake system of Fig. 2 may be described as a split of a conventional tandem master cylinder into two single master cylinders 50 and 74. Due to the hydraulic line 80 and the pump 94, no mechanical connection between the two master cylinders 50 and 74 or between the two pressure chambers 52 and 72 is needed, even in case of a failure/leakage within the first master cylinder 50 and/or the first brake circuit 62. Instead, the loss of the mechanical backup between the two master cylinders 50 and 74 may be overcome by the advantageous function of the at least one pump 94 of the second brake circuit 68.

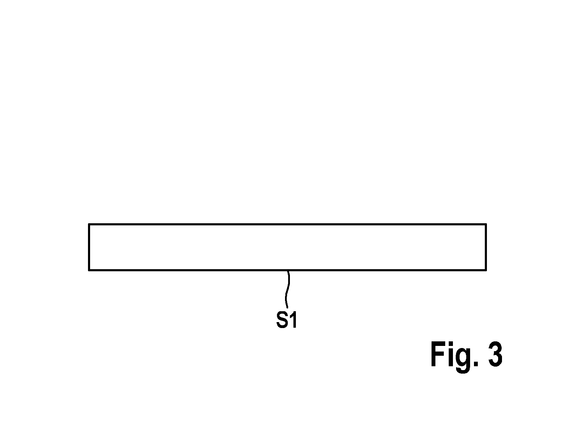

Fig. 3 shows a flow chart of an embodiment of the method of operating a brake system of a vehicle.

The method is performable by a brake system which comprises a first master cylinder with at least a first pressure chamber and a first piston, wherein the first piston is mechanically connected via at least one braking force transmission element to a brake actuation element, a first brake circuit tied to the first pressure chamber with at least one first wheel brake cylinder, a second master cylinder with a second pressure chamber, a pre-chamber and a second piston separating the second pressure chamber from the pre-chamber, a hydraulic line connecting the pre-chamber to the first pressure chamber hydraulically and a second brake circuit tied to the second pressure chamber with at least one second wheel brake cylinder and at least one pump. For instance, the method may be carried out with the embodiment of the brake system described above. However, the method may also be carried out with a different brake system.

The method comprises a step S1, in which a brake pressure in the at least one second wheel brake cylinder is build-up by activating the at least one pump of the second brake circuit in case that an increase of an internal pressure within the second pressure chamber is inhibited despite a braking force applied on the brake actuation element. Preferably, at least one pump of an ESP-system is used to perform step S1. In this case, no additional pump is required for carrying out step S1.

The method thus provides an advantageous security standard of the brake system even in case of a failure/leakage within the first pressure chamber and/or the first brake circuit. Moreover, the brake system used for carrying out the method requires only a hydraulic connection between the first master cylinder and the second master cylinder. Due to this advantageous architecture of the brake system, it is possible to arrange at least the second master cylinder distant from the feet of the driver. Furthermore, the new architecture of the brake system may decrease the package length of the brake system along a longitudinal axis, along which the first piston of the first master cylinder and/or the braking force transmission element is movable. The method is therefore performable using a brake system which provides a decreased risk of an unwanted contact between the driver and the brake actuation element or another component of the braking system even in case of an accident.

## Claims

1. Brake system for a vehicle comprising:
a first master cylinder (50) with at least a first pressure chamber (52) and a first piston (54), wherein the first piston (54) is mechanically connectable via at least one braking force transmission element (56) to a brake actuation element in a way that the first piston (54) is movable at least partially into the first pressure chamber (52) by a braking force applied on the brake actuation element, and wherein a first internal pressure within the first pressure chamber (52) is increasable by moving the first piston (54) at least partially into the first pressure chamber (52);
a first brake circuit (62) with at least a first wheel brake cylinder (64), wherein the first brake circuit (62) is tied to the first pressure chamber (52) in a way that a first brake pressure within the at least one first wheel brake cylinder (64) is increasable by an increase of the first internal pressure within the first pressure chamber (52); and
a second brake circuit (68) with at least a second wheel brake cylinder (70), wherein a second brake pressure within the at least one second wheel brake cylinder (70) is increasable by the braking force;
**characterized in that**
the second brake circuit (68) is tied to a second pressure chamber (72) of a second master cylinder (74) comprising the second pressure chamber (72), a pre-chamber (76) and a second piston (78) separating the second pressure chamber (72) from the pre-chamber (76), and wherein the pre-chamber (76) is hydraulically connected to the first pressure chamber (52) via a hydraulic line (80).

2. Brake system according to claim 1, wherein the second master cylinder (74) is arranged distant from the first master cylinder (50).

3. Brake system according to claim 1 or 2, wherein the first piston (54) is movable at least partially into the first pressure chamber (52) along a first longitudinal axis (90) and the second piston (78) is movable at least partially into the second pressure chamber (72) along a second longitudinal axis (92), and wherein the second master cylinder (74) is arranged with regard to the first master cylinder (50) in a way that the second longitudinal axis (92) is tilted to the first longitudinal axis (90) or the second longitudinal axis (92) runs parallel to and distant from the first longitudinal axis (90).

4. Brake system according to one of the preceding claims, wherein the first master cylinder (50) is of a master cylinder type with only a single pressure chamber (52).

5. Brake system according to one of the preceding claims, wherein the second brake circuit (68) comprises a least one pump (94), and wherein the second brake pressure within the at least one second wheel brake cylinder (70) of the second brake circuit (68) is also increasable by the at least one pump (94) of the second brake circuit (68).

6. Brake system according to claim 5, wherein the brake system comprises a control unit (96) being designed to control the at least one pump (94) of the second brake circuit (68) in a way that the second brake pressure within the at least one second wheel brake cylinder (70) of the second brake circuit (68) is built up by the at least one pump (94) of the second brake circuit (68) even when an increase of a second internal pressure within the second pressure chamber (72) is inhibited despite a braking force applied on the brake actuation element.

7. Brake system according to claim 6, wherein the control unit (96) is designed to compare a target value with regard to the first internal pressure, at least one pressure within the first brake circuit (62), the second internal pressure and or at least one pressure within the second brake circuit (68) with an actual value of the first internal pressure, the at least one pressure within the first brake circuit (62), the second internal pressure and/or the at least one pressure within the second brake circuit (68), and wherein the control unit (96) is further designed to increase an output of the at least one pump (94) of the second brake circuit (68) in case that the at least one actual value differs from the at least one target value.

8. Brake system according to claim 7, wherein the control unit (96) is further designed to close at least one valve within the hydraulic line (80) in case that the at least one actual value differs from the at least one target value.

9. Brake system according to claim 7 or 8, wherein the brake system comprises at least one brake force sensor (100), brake pressure sensor and/or displacement sensor arranged at the brake actuation element and/or the at least one braking force transmission element (56), and wherein the control unit (96) is designed to define the at least one target value depending on at least one value received from the at least one brake force sensor (100), brake pressure sensor and/or displacement sensor.

10. Method of operating a brake system of a vehicle comprising a first master cylinder (50) with at least a first pressure chamber (52) and a first piston (54), wherein the first piston (54) is mechanically connected via at least one braking force transmission element (56) to a brake actuation element, a first brake circuit (62) tied to the first pressure chamber (52) with at least a first wheel brake cylinder (64), a second master cylinder (74) with a second pressure chamber (72), a pre-chamber (76) and a second piston (78) separating the second pressure chamber (72) from the pre-chamber (76), a hydraulic line (80) connecting the pre-chamber (76) to the first pressure chamber (52) hydraulically and a second brake circuit (68) tied to the second pressure chamber (72) with at least a second wheel brake cylinder (70) and at least one pump (94), comprising the step of:
Building up brake pressure in the at least one second wheel brake cylinder (70) of the second brake circuit (68) by activating the at least one pump (94) of the second brake circuit (68) in case that an increase of an internal pressure within the second pressure chamber (72) is inhibited despite a braking force applied on the brake actuation element (S1).
